(19) Europäisches Patentamt
European Patent Office
Office européen des brevets

(11) Publication number: **0 508 154 B1**

# (12) EUROPEAN PATENT SPECIFICATION

(45) Date of publication of patent specification: **27.09.95**

(51) Int. Cl.$^{6}$: **F03B 3/12**

(21) Application number: **92104399.8**

(22) Date of filing: **13.03.92**

## (54) High head pump-turbines.

(30) Priority: **13.03.91 JP 48398/91**

(43) Date of publication of application:
**14.10.92 Bulletin 92/42**

(45) Publication of the grant of the patent:
**27.09.95 Bulletin 95/39**

(84) Designated Contracting States:
**CH DE FR LI**

(56) References cited:
**GB-A- 1 006 299**

**PATENTS ABSTRACTS OF JAPAN, vol. 9, no. 272 (M-425)[1995], 30th October 1985;& JP-A-60 116 874 (TOSHIBA K.K.) 24-06-1985**

(73) Proprietor: **KABUSHIKI KAISHA TOSHIBA**
**72, Horikawa-cho,**
**Saiwai-ku**
**Kawasaki-shi,**
**Kanagawa-ken 210,**
**Tokyo (JP)**

(72) Inventor: **Tsunoda, Sachio**
**2-41-7, Motoouhashi,**
**Sakae-ku**
**Yokohama-shi,**
**Kanagawa-ken (JP)**
Inventor: **Tanaka, Hiroshi**
**1-45-45, Konandai,**
**Konan-ku**
**Yokohama-shi,**
**Kanagawa-ken (JP)**
Inventor: **Yamagata, Ichiro**
**2-10-22, Nakahara,**
**Isogo-ku**
**Yokohama-shi,**
**Kanagawa-ken (JP)**
Inventor: **Fujiki, Shigeto**
**3-4-13, Watado,**
**Fujimi-shi**
**Saitama-ken (JP)**
Inventor: **Yoshikazu, Kobayashi**
**2-21-12, Kitakata,**
**Ichikawa-shi**
**Chiba-ken (JP)**
Inventor: **Terasaki, Akira**
**1-16-9, Izumigaoka,**
**Utsunomiya-shi**
**Tochigi-ken (JP)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

(74) Representative: **Lehn, Werner, Dipl.-Ing. et al**
**Hoffmann, Eitle & Partner,**
**Patentanwälte,**
**Postfach 81 04 20**
**D-81904 München (DE)**

## Description

BACKGROUND OF THE INVENTION

This invention relates to a high head pump-turbine having a unitary runner made up of a rigid combination of a circular plate shaped crown (upper plate) a band (lower plate), and a plurality of runner vanes which are arranged to form a circular vane cascade between the crown and band, wherein the flow path height of the outermost periphery between the crown and band is extremely smaller than the outermost diameter, and the runner is constructed flat and narrowly, according to the preamble of the claim.

Fig. 11 of the accompanying drawings shows a general construction of a usual high head pump-turbine (see also JP-A-59 173568). A runner 2 is secured to the lower end of a main shaft 1 directly connected to a generator/motor. About the runner 2 are disposed a plurality of guide vanes 3 arranged to form a stationary circular vane cascade as shown in Fig. 12. As shown in Figs. 13 and 14, the runner 2 is formed as an integral construction including a rigid combination of a circular disc shaped crown 2a, a band 2b and a plurality of runner vanes 2c arranged as a moving circular vane cascade. The upper portion of runner 2 is covered by an upper cover 4, while the lower portion of runner 2 is covered by a lower cover 5, and a runner chamber 6 is defined between the upper and lower covers 4 and 5 for accommodating the runner 2.

When the pump-turbine is used as a turbine, high pressure water is admitted into a spiral casing 7 provided to encompass the runner 2 via stay vane 8, and guide vanes 3 to flow into the runner chamber 6. The water flows uniformly from the outside around the outer periphery of runner vanes 2c and then flows radially inwardly through peripheral inlet paths of these runner vanes, thereby rotating the runner 2. Thereafter the water is discharged to the outside from the lower end of the main shaft 1 through a draft tube 9.

In a high head pump-turbine installed in a high head pumped storage power station usually having an operating head of more than 400 m, for the purpose of operating the pump-turbine at a high speed and with a small quantity of water flow as a result of high head, the runner 2 is required to have a flat characteristic construction such that the height B of the outermost flow passage between the crown 2a and band 2b is less than 0.1 times outermost peripheral diameter $D_0$ of the runner, and that the number $Z_R$ of the runner vanes 2c constituting a moving vane cascade is selected to be 6 to 8, and that the number $Z_G$ of guide vanes 3 constituting a stationary vane array is selected to be 12 to 32 which is larger than $Z_R$.

During the operation of such high head pump/turbine, as above described the high pressure water flowing into the runner chamber 6 through guide vanes 3 constantly collides with the runner vanes 2c so that the leading edges of the runner vanes 2c in the moving vane cascade of the rotating runner 2 regularly and repeatedly pass by the trailing edge portions of the guide vanes 3 and between the vanes in the stationary vane cascade. As a consequence, the runner is subjected to a regularly varying hydraulic excitation caused by hydraulic interference between the moving vane cascade and the stationary vane cascade (see Fig. 15). Consequently, in the runner 2, due to the hydraulic excitation described above, the crown 2a and the band 2b are subjected to a disc vibration having nodes at rigid joints between runner vanes. Especially, a runner of a flat and disc type of a high head pump-turbine having a height B of the outermost peripheral flow path between the crown and band which is less than 0.1 times the outermost diameter $D_0$ is subjected to a remarkable vibration allowing a large vibration stress.

The frequency $f_H$ of the hydraulic excitation acting on the runner 2 when it is rotated at a rated speed, is expressed by a relation $Z_G \bullet N_0/60$ (Hz) (where $N_0$ represents the number of revolutions (r.p.m.)) because the runner vanes 2c are subjected to $Z_G$ times hydraulic interference corresponding to the number of the guide vanes in the stationary vane cascade during one revolution. In the case where the natural vibration frequency $f_N$ of the runner 2 is close to the frequency $f_H$ of the hydraulic excitation, the vibration stress becomes larger due to a resonance phenomenon. Even when such resonance state can be avoided under a condition in which vibration response of the runner 2 with respect to the hydraulic excitation is large, the vibration stress nevertheless becomes large, thereby hastening the runner fatigue which results in a fatigue destruction of the runner 2.

For decreasing the runner vibration stress, it has been proposed a method of avoiding the resonance phenomenon by adjusting the natural vibration frequency $f_N$ of the runner to be a level remote from hydraulic excitation frequency $f_H$ as disclosed in Japanese Laid Open Patent Specification No. 59 173568/1984. However, this method is not always adequate for the actual state of the runner vibration, and can not attain its object.

More particularly, in the prior art investigation, in what manner the hydraulic excitation acts on the runner and by what mechanism the vibration takes place have not been cleared. For this reason, the fundamental effect upon the runner vibration and the magnitude of the vibration stress were not correctly understood. Furthermore, it has not been cleared as to in what case the vibration stress increases and no successful means has been found.

We have clarified the mechanism of the runner vibration and the fundamental effect upon the vibration stress as disclosed in our technical paper presented in the JSME symposium on fluid engineering No. 900-54, entitled "Vibration Behavior of Runners of High Head Pump-Turbines (first report)", page 49-51 on Aug. 29 and 30, 1990, in Tokyo.

A summary of the technical paper is as follows:

(1) In the past, the runner vibration was considered on the assumption that the runner has a simple circular plate like construction. In this paper, however we have considered that the runner consists of a circular plate shaped crown as a horizontal member, a circular plate shaped band as another horizontal member and the runner vanes as vertical members arranged to form a circular vane cascade between both horizontal members, and that the runner is replaced by an annular Rahmen (skeleton structure) formed by rigid combination of each of the horizontal and vertical members. This construction is close to the dynamic state of the runner. We have observed the runner vibration of the runner.

(2) The rotating runner is subjected to a periodically varying hydraulic excitation having an amplitude $F_{V0}$ on each runner vane due to the hydraulic interference (see Fig. 16) between the runner vanes and the guide vanes. Denoting the center angle of the vane arrangement spacing by the runner vane cascade by $\theta_R = [2\pi/Z_R]$, and denoting an integer n [= $Z_G$ - $mZ_R$] having a minimum absolute value of a relative difference obtained by subtracting a positive integer multiple $m \bullet Z_R$ of $Z_R$ from $Z_G$, the phase lag of hydraulic excitations acting upon adjoining two runner vanes is expressed by an equation $\theta_R \bullet n$ [= $(2\pi/Z_R)(Z_G - mZ_R)$] which is expressed by combined functions of $Z_G$ and $Z_R$.

(3) Due to the effect of the hydraulic excitation acting on each of the runner vanes, a dynamic bending moment which varies at the same period as the hydraulic excitation is applied to joints of the runner vane to the crown and band. This dynamic bending moment accompanied with such fixed end bending deformation as shared by the crown, band and runner vanes can be obtained by multiplying the maximum dynamic bending moment $m_0$ which is equal to the runner vane fixed end moment to be generated when the rigidity of the crown and band is extremely large and therefore the total bending deformation is received only by the runner vanes by a moment coefficient $C_{M0}$, so that the dynamic bending moment at the joints on the side of the runner vanes is expressed by $M_0$ (= $C_{M0}$ $m_0$), whereas the dynamic bending moment of the joints on the side of the crown and band is expressed by $M_0/2$.

The moment coefficient $C_{M0}$, that is the moment amplitude ratio ($M_0/m_0$) in which $m_0$ is taken as a reference can be given by the following theoretical equations by using a trigonometrical function cos-($\theta_R$n) and a function of a rigidity ratio $K_R$ of the crown and band by taking runner vanes as a reference.

$$C_{M0} = 2K_R \{1 + 4(3K_R+1)^2 - 4(3K_R+1) \bullet \cos(\theta_R n)\}^{\frac{1}{2}}/(2K_R+1) \bullet (6K_R+1) \qquad (1)$$

Denoting the thickness ratio of the crown and band to the runner vanes by $t/t_V$ and the sectional secondary moment ratio by $I/I_V$, the rigidity ratio $K_R$ of the crown and band to the runner vanes can be calculated with the following equation.

$$\begin{aligned} K_R &= (I/I_V)(Z_R B/\pi D_0) \\ &= (t/t_V)^3(Z_R B/\pi D_0) \qquad (2) \end{aligned}$$

These equations show that $C_{M0}$ increases when the thicknesses of the crown and band are increased to increase $K_R$ and that when $K_R$ is made to extremely large $C_{M0}$ becomes 1 and $M_0$ becomes the maximum value of $m_0$.

(4) Due to the action of the dynamic moment at the joints, the crown and band between the runner vanes accompany a disc vibration which displaces in the direction of the axis of the runner rotation wherein the joints of the crown and band to the runner vanes act as node.

(5) Where the damping ratio $\zeta$ of the vibration ($c/2(mk)^{\frac{1}{2}}$, where c represents a viscosity damping coefficient, m represents mass and k a spring constant) is made to be constant, the magnitude of the vibration stress amplitude $\Delta\sigma$ varies in direct proportion to a moment coefficient $C_{M0}$ (= $M_0/m_0$) representing the magnitude of the dynamic bending moment $M_0$. The basic influencing factors on $C_{M0}$ are a phase lag $\theta_R$n between the hydraulic excitations acting on adjoining two runner vanes and the rigidity ratio $K_R$ of the crown and band to the runner vanes. By decreasing $K_R$ and by keeping the phase lag $\theta_R$n to be adequate, $C_{M0}$ can be decreased. Then the vibration stress $\Delta\sigma$ can be decreased in direct proportion to $C_{M0}$.

(6) Where the effect of the damping ratio of the vibration is taken into consideration, as the rigidity ratio $K_R$ decreases from a large value caused by the decrease of $K_R$ due to a decrease of the thicknesses of the crown and band, the attenuation ratio $\zeta$ tends to increase due to the attenuation of the spring constant so that the vibration stress amplitude $\Delta\sigma$ decreases to a small value less than a decreased level in direct proportional to the decrease of $C_{M0}$.

## SUMMARY OF THE INVENTION

It is therefore an object of this invention to provide a novel pump-turbine for use with a high head, which has a small runner vibration response due to the hydraulic excitation, a low runner vibration stress and a high safety.

Another object of this invention is to provide a novel pump-turbine for use with a high head capable of holding at an optimum state, the phase relation of hydraulic excitation of the runner by suitably combining $Z_R$ and $Z_G$ so as to decrease the dynamic bending moment, maintaining the rigidity of the principal vibrating members in a specific range in accordance with the phase relation of hydraulic excitations, and decreasing the amplitude of the vibration stress to a low level.

These objects are solved by the features of the claim. The high head pump-turbine of this invention operates as follows.

For preventing a runner fatigue destruction caused by the increase of the runner vibration due to action of the hydraulic excitation, it is necessary to decrease the vibration stress amplitude $\Delta\sigma$ to a value of less than 1/2 of the amplitude of the maximum amplitude stress corresponding to the possible maximum dynamic bending moment $m_0$. On the other hand, the magnitude of the amplitude $\Delta\sigma$ of the vibration stress at the joints of the runner vanes varies in direct proportion toward the moment coefficient $C_{M0}$ indicating the magnitude of amplitude $M_0$ of the dynamic bending moment. Thus, the amplitude of the runner vibration stress can be made sufficiently small by selecting the rigidity ratio $K_R$ which is a function of a ratio between the mean thickness $t_V$ of the runner vanes and the thickness of the crown or band such that the moment coefficient $C_{M0}$ will be less than 0.5, in accordance with the value $\cos(\theta_R n)$ varying according to the combination of the number of runner vanes and the number of guide vanes. By increasing or decreasing the thickness at the outer peripheral portion of the crown and band with reference to the thickness at the central portion, in accordance with the value of $\cos(\theta_R n)$, the natural frequency of the runner can be varied, thereby avoiding the resonance state with the frequency of vibration of the runner caused by hydraulic excitation.

## BRIEF DESCRIPTION OF THE DRAWINGS

In the accompanying drawings:

Fig. 1 is a graph showing a case wherein the number of the runner vanes is 6 and a relation among a moment coefficient $C_{M0}$ representing the magnitude of the bending moment acting upon the joints of the runner vanes at the time of vibration of the runner, a trigonometric function $\cos(\theta_R n)$ of the phase lag of the hydraulic excitations acting upon adjoining two runner vanes, the trigonometric function being a factor that influences $C_{M0}$ and the rigidity ratio $K_R$ of the crown and band to the runner vanes taking the rigidity of the runner vanes as a reference;

Fig. 2 is a graph showing the relation among $C_{M0}$, $\cos(\theta_R n)$ and $K_R$ where the number of the runner vanes is 7;

Fig. 3 is a graph showing the relation among $C_{M0}$, $\cos(\theta_R n)$ and $K_R$ where the number of runner vanes is 8;

Fig. 4 is a graph showing the relation between $K_R$ corresponding to the upper permissible value of $C_{M0}$ and $\cos(\theta_R n)$;

Fig. 5 is a developmental view looking from the outer periphery wherein the runner is replaced by an annular Rahmen in which the crown and band take the form of horizontal members and the runner vanes take the form of vertical members;

Fig. 6 is a vibration response diagram caused by the vibration of the runner due to hydraulic excitation;

Fig. 7 is a vertical sectional view showing essential portions of the runner constructed according to one embodiment of this invention;

Fig. 8 is a vertical sectional view showing essential portions of the runner according to another embodiment of this invention;

Fig. 9 is a graph showing the test result of the vibration stress amplitude at the joints of runner vanes embodying this invention;

Fig. 10 is a graph showing the test result of the vibration stress amplitude at the joints of the runner vanes according to the another embodiment of this invention;

Fig. 11 is a vertical sectional view showing a diagrammatic construction of a conventional high head pump/turbine;

Fig. 12 is a plan developmental view showing relative arrangement of the runner vanes and guide vanes;

Fig. 13 is a vertical sectional view showing essential parts of a high head pump-turbine runner;

Fig. 14 is a developmental view of a runner portion between two adjacent runner vanes as seen from the outer periphery side;

Fig. 15 is a graph showing a periodically varying pressure caused by guide vanes; and

Fig. 16 is a graph explaining the varying pressure acting upon the runner.

## DESCRIPTION OF THE PREFERRED EMBODIMENTS

Let us consider the vibration and the vibration stress of the runner 2 on the assumption that the runner 2 comprises a crown 2a and a band 2b in the form of horizontal members, that the runner vanes 2c are vertical members and that the runner 2 is substituted by an annular Rahmen consisting of the respective members equivalent in rigidity to the runner 2.

Fig. 5 shows a developmental view of the annular Rahmen of runner 2 as seen from the side of the outer periphery and shows a portion between two adjacent runner vanes of ith and (i+1)th vanes, while Fig. 6 is a diagram showing a vibration response state of runner 2 caused by the vibration due to hydraulic excitation. Respective runner vanes are subjected to a hydraulic excitation due to an effect of a periodically varying pressure caused by a hydraulic interference of a guide vane cascade, as shown in Fig. 16. More particularly, the ith runner vane and (i+1)th runner are respectively subjected to hydraulic excitations expressed by $F_{Vi} = F_{V0}\cos(Z_G\theta)$ and $F_{Vi}+1 = F_{V0}\cos(Z_G\theta + \theta_R n)$ corresponding to respective phases $Z_G\theta$, $Z_G\theta + \theta_R n$ of respective runner vanes, where $F_{V0}$ represents the maximum hydraulic excitation caused by the hydraulic pressure. As a consequence, these hydraulic excitations $F_{Vi}$ and $F_{Vi+1}$ cause dynamic bending moments $M_i$, $M_i/2$, $M_{i+1}$ and $M_{i+1}/2$ on joints of the runner vanes, crown and band, whereby as shown by dotted lines in Fig. 6 the crown 2a and band 2b between runner vanes are deflected in the direction of the axis of rotation taking the runner vane 2c as a node, thus generating a runner vibration with diametrical nodes. When $F_{Vi}$ and $F_{Vi+1}$ have opposite phases, the crown 2a and band 2b interposed between the runner vanes undergo the maximum deflection in the direction of the axis of rotation.

In such runner vibration as caused by the hydraulic excitations created by the hydraulic interference of the stationary vane cascade on the side of the outer periphery, as shown in Fig. 12, the outer peripheral portion between the outermost periphery of the runner close to the stationary vane cascade and a circle inscribing the chord of a sector of a center angle $\theta_R$ ($= 2\pi/Z_R$) on a circle having a diameter of $D_0$ acts as a main vibrating member, and the rigidity ratio $K_R$ of crown 2a and band 2b to runner vanes 2c determined by taking the rigidity of runner vanes 2c as a reference has an influence upon the vibration. This rigidity ratio $K_R$ is calculated by equation (2) described above. More particularly, the rigidity ratio $K_R$ of the crown taking the runner vane portion at the outer periphery as a reference is expressed by

$$(t_C/t_V)^3(Z_R B/\pi D_0)$$

and the rigidity ratio $K_R$ of the band is expressed by

$$(t_B/t_V)^3(Z_R B/\pi D_0)$$

where

- $t_C$: means thickness of the crown on the outside of diameter $D_0\cos(\theta_R/^2)$ of a circle inscribing the chord of a sector,
- $t_B$: means thickness of the band,
- $t_V$: means thickness of the runner vanes.

On the other hand, the amplitude $\Delta\sigma$ of the vibration stress at the joints of runner vanes 2c resulting from the runner vibration is proportional to the moment coefficient $C_{M0}$ representing the dynamic bending moment ratio $M_0/m_0$ and greatly influenced by the magnitude of the trigonometric function $\cos(\theta_R n)$ of the phase lag ($\theta_R n$) between the hydraulic excitations on adjoining two runner vanes and by the magnitude of the rigidity ratio $K_R$ of the crown 2a and band 2b at the outer peripheral portion.

When the degree of influence of the magnitude of $\cos(\theta_R n)$ which varies depending upon the combination of $Z_R$ and $Z_G$ and of the magnitude of the rigidity ratio $K_R$ upon the moment coefficient, is determined from the relative equations on $C_{M0}$ taking $K_R$ and $\cos(\theta_R n)$ as functions described above, a combination of $Z_R = 6$ and $Z_G = 12 \sim 32$ in the practical range can be shown in Fig. 1, and a combination of $Z_R = 8$ and $Z_G = 12 \sim 32$ can be shown in Fig. 3. As can be noted from Figs. 1 - 3, $C_{M0}$ has such relative relation that the value of $C_{M0}$ becomes large when $\cos(\theta_R n)$ has a value in the negative range and small when the $\cos(\theta_R n)$ has a value in the positive range. Further, there are such relative relation that as $K_R$ becomes large $C_{M0}$ become large and vice versa.

To decrease the vibration stress amplitude $\Delta\sigma$ to a low level of less than 1/2 of the maximum vibration stress amplitude $\Delta\sigma_0$ corresponding to the maximum dynamic bending moment $m_0$ described above, which is safe from the standpoint of fatigue strength, the magnitude of the moment coefficient $C_{M0}$ ($= M_0/m_0$) shown in Figs. 1 ~ 3 must be decreased to a value of less than 0.5. The relation between $\cos(\theta_R n)$ corresponding to the upper limit permissible value 0.5 of $C_{M0}$ and $K_R$ can be shown in Fig. 4. From these facts, it can be noted that by selecting a rigidity ratio $K_R$ from equation (1) representing a function of cos-($\theta_R n$) and the rigidity ratio $K_R$ to be such value as maintaining the moment coefficient $C_{M0}$, in accordance with the value of $\cos(\theta_R n)$ which varies according to the combination of the number of runner vanes $Z_R$ and the number of guide vanes $Z_G$, it is possible to decrease the vibration of the runner to a safe low level.

By selecting the thicknesses of the crown and band to values such that the rigidity ratio $K_R$ is less than 0.5 when $\cos(\theta_R n) = 1$ which is determined by the combination of $Z_R$ and $Z_G$ shown in Figs. 1 ~ 3 and that the rigidity ratio $K_R$ is less than 0.206 when $\cos(\theta_R n) = -0.5$, it is possible to make the value of $C_{M0}$ to be less than 0.5, thereby decreasing the vibration stress amplitude $\Delta\sigma$ to a safe low level.

In the case of a combination of $Z_G$ and $Z_R$ wherein $\cos(\theta_R n)$ is in a positive range, the value of $C_{M0}$ is smaller than the value of $C_{M0}$ when $\cos(\theta_R n) < 0$. Even when the rigidity ratio is made relatively large, it is easy to maintain $C_{M0}$ to be less than 0.5. Thus by gradually increasing the thicknesses of the crown 2a and band 2b from the center portion in a manner such that the thicknesses $t_C$ and $t_B$ at the peripheral portion of the crown 2a and band 2b can be expressed by relations $t_C/t_{MC} \geqq 1$ and $t_B/t_{MB} \geqq 1$ respectively, where $t_{MC}$ and $t_{MB}$ represent the thicknesses of the crown and band at the center portion and $t_C$ and $t_B$ represent the mean thicknesses of the outer peripheral portions, it is possible to increase the number of natural vibrations of the runner 2, thereby avoiding the resonance of the natural vibration frequency $f_N$ of the runner with the frequency $f_H$ of the hydraulic excitation acting on the runner.

In the case of a combination of $Z_G$ and $Z_R$ wherein $\cos(\theta_R n)$ is in a negative range, the value of $C_{M0}$ is larger than the value of $C_{M0}$ when $\cos(\theta_R n) > 0$ by gradually decreasing the thicknesses of the crown 2a and band 2b from the central portion such that the ratio of the thicknesses at the peripheral portion to the thicknesses at the central portion of the crown 2a and band 2b would be respectively expressed by relations $t_C/t_{MC} \leqq 1$ and $t_B/t_{MB} \leqq 1$. Then it becomes possible to avoid resonance of the natural vibration frequency $f_N$ with that $f_H$ of the hydraulic excitation.

Embodiment 1

In the case of a combination of $Z_R = 7$ and $Z_G = 20$, the value of $\cos(\theta_R n)$ is +0.623 as shown in Fig. 2, and the runner can be constructed to have a value of $C_{M0}$ of less than 0.5, when the following conditions are established as shown in Fig. 7. of less than 0.5, when the following conditions are established as shown in Fig. 7.

$$B/D_0 \leqq 0.1,$$
$$t_C/t_{MC} \geqq 1,\ t_B/t_{MB} \geqq 1,$$
$$(t_C/t_V)^3(Z_R B/\pi D_0) \leqq 0.39,$$
$$(t_B/t_V)^3(Z_R B/\pi D_0) \leqq 0.39.$$

As a consequence, as the result of measurement (shown in Fig. 9), when the number of revolutions N (r.p.m.) is varied, the vibration stress amplitude $\Delta\sigma$ of the joints of runner vanes can be decreased to a safe low level described above. This proves that this construction is sufficiently safe with respect to the permissible stress 5 $kgf/mm^2$ for the runner fatigue strength. Further, since the natural frequency $f_N$ has been increased, it has been proved that no resonance occurs near the rated rotating speed $N_0$ (r.p.m.) ($f_N/f_H > 1$).

Embodiment 2

In the case of a combination of $Z_R = 6$ and $Z_G = 20$, as shown in Fig. 1, the value of $\cos(\theta_R n)$ becomes -0.5 and the runner can be constructed to have a value of $C_{M0}$ of less than 0.5 when the following conditions are established as shown in Fig. 8. of less than 0.5 when the following conditions are established as shown in Fig. 8.

$$B/D_0 \leqq 0.1$$
$$t_C/t_{MC} \leqq 1,\ t_B/t_{MB} \leqq 1$$
$$(t_C/t_V)^3(Z_R B/\pi D_0) \leqq 0.206 \text{ and}$$
$$(t_B/t_V)^3(Z_R B/\pi D_0) \leqq 0.206.$$

Fig. 10 shows the result of measurement of the vibration stress amplitude $\Delta\sigma$ at the joints of the runner vanes when the number of revolutions (r.p.m.) is varied. In Fig. 10, the broken line shows the result of measurement when the thickness ($t_C$, $t_B$) of the outer peripheral portion is made larger than that of this invention. The vibration stress amplitude $\Delta\sigma$ of this invention is smaller than that shown by dotted lines as shown by a solid line and decreased to the safe low level as has been described above which proves that this level is sufficient to the permissible stress 5 $kgf/mm^2$ for the runner fatigue strength. Furthermore, the natural frequency $f_N$ is also decreased and it was found that there is no resonance ($f_N/f_H < 1$) near the rated rotating speed $N_0$.

Since the pump-turbine is constructed as above described, by suitably combining $Z_R$ and $Z_G$ the phase relation of the hydraulic excitation is maintained at an adequate state, so that the dynamic moment due to the hydraulic excitation can be reduced, and the rigidity of the main vibrating parts at the outer peripheral portion of the runner can be maintained in a specific range in accordance with the phase relation of the hydraulic excitation. Further, it is possible to decrease the amplitude of the dynamic bending moment to be less than 1/2 of the amplitude of the maximum possible dynamic bending moment, thereby decreasing the amplitude of the vibration stress to a safe low level. As a consequence, it is possible to make adequate the fundamental influencing factors of the runner vibration, thereby effectively decreasing the vibration stress of the runner to a safe value.

## Claims

**1.** A high head pump-turbine comprising:

a flat pump-turbine runner (2) having a diameter $D_0$ at an outermost periphery thereof, an outlet sealing portion on an inner side of the runner (2), a crown (2a), a band (2b), and a plurality of runner vanes (2c) forming a runner vane cascade, the runner vanes (2c) connecting the crown to the band such that a plurality of flow paths are formed, each of said flow paths being defined between the crown (2a), the band (2b), and adjacent runner vanes (2c); and

a guide vane cascade including a plurality of stationary guide vanes (3) disposed around the runner (2);

wherein a height B of the flow paths at the outermost periphery of the runner between the crown (2a) and the band (2b) is smaller than the diameter $D_0$;

**characterized** in that, when

1) a minimum integer n is defined as

$$n = |Z_G - mZ_R|$$

where m is a positive variable, $Z_R$ is the number of runner vanes (2c), and $Z_G$ is the number of guide vanes (3),

2) a center angle defined between adjacent runner vanes (2c) and a center point of the runner is denoted $\theta_R$,

3) a phase lag between hydraulic exciting forces acting upon adjacent runner vanes (2c) is defined as $\theta_R n$,

4) a trigonometric function of the phase lag varies in accordance with the number of runner vanes $Z_R$ and the number of guide vanes $Z_G$, the trigonometric function defined as $\cos(\theta_R n)$;

5) a mean thickness of the crown (2a) along a first circle defined by a mean diameter $D_m$ at a point midway between the outermost peripheral diameter $D_0$ of the runner (2) and a maximum diameter $D_S$ of the outlet sealing portion is denoted as $t_{MC}$,

6) a thickness of the band (2b) at the mean diameter $D_m$ is denoted as $t_{MB}$,

7) a mean thickness of the crown (2a) outside of a second circle inscribing a chord of a sector having a center angle $\theta_R$ is denoted as $t_C$,

8) a mean thickness of the band (2b) is denoted as $t_B$, and

9) a rigidity ratio $K_R$ is the ratio of the rigidity of the crown (2a) and the band (2b) to the rigidity of the runner vanes (2c) by taking a rigidity of the runner vanes (2c) as a reference,

the rigidity ratio $K_R$ is determined so that a moment coefficient $C_{MO}$ which is a function of cos($\theta_R$n) and the rigidity ratio $K_R$ is less than 0.5 in accordance with the value of the trigonometric function cos($\theta_R$n) which varies depending upon the number of runner vanes $Z_R$ and the number of guide vanes $Z_G$;

wherein when a value of cos($\theta_R$n) is positive, relationships $t_C/t_{MC} \geqq 1$ and $t_B/t_{MB} \geqq 1$ are obtained and when a value of cos($\theta_R$n) is negative, relationships $t_C/t_{MC} \leqq 1$ and $t_B/t_{MB} \leqq 1$ are obtained.

## Patentansprüche

**1.** Speicherpumpe mit großer Förderhöhe umfassend:
ein ebenes Speicherpumpenlaufrad (2) mit einem Durchmesser $D_0$ am äußersten Umfang desselben, ein den Ausgang abdichtender Bereich auf einer inneren Seite des Laufrades (2), eine Deckplatte (2a), ein Ring (2b), und eine Vielzahl von Läuferschaufeln (2c), die eine Kaskade von Läuferschaufeln bilden, wobei die Läuferschaufeln (2c) die Deckplatte so mit dem Ring verbinden, daß eine Vielzahl von Strömungspfaden gebildet wird, wobei jeder der Strömungspfade zwischen der Deckplatte (2a), dem Ring (2b) und benachbarten Läuferschaufeln (2c) begrenzt wird; und
eine Kaskade von Leitschaufeln, die eine Vielzahl von ortsfesten Leitschaufeln (3) einschließen, die um das Laufrad (2) angeordnet sind;
worin eine Höhe B der Strömungspfade am äußersten Rand des Laufrades zwischen der Deckplatte (2a) und dem Ring (2b) kleiner als der Durchmesser $D_0$ ist;
dadurch **gekennzeichnet,** daß, wenn

1) eine minimale ganze Zahl n definiert wird als

$$n = |Z_G - mZ_R|$$

worin m eine positive Variable, $Z_R$ die Anzahl der Läuferschaufeln (2c), und $Z_G$ die Anzahl der Leitschaufeln (3) ist,

2) ein Mittelpunktswinkel, der zwischen benachbarten Läuferschaufeln (2c) und einem Mittelpunkt des Laufrades definiert ist, mit $\theta_R$ bezeichnet wird,

3) ein Phasenunterschied zwischen hydraulischen anregenden Kräften, die auf benachbarte Läuferschaufeln (2c) wirken, als $\theta_R$n definiert ist,

4) eine trigonometrische Funktion der Phasenverschiebung gemäß der Anzahl der Läuferschaufeln $Z_R$ und der Anzahl der Leitschaufeln $Z_G$ variiert, wobei die trigonometrische Funktion als cos($\theta_R$n) definiert ist;

5) eine mittlere Dicke der Deckplatte (2a) entlang eines ersten Kreises, der durch einen mittleren Durchmesser $D_m$ an einem Punkt in der Mitte zwischen dem äußersten Umfangsdurchmesser $D_0$ des Laufrades (2) und einem maximalen Durchmesser $D_S$ des den Ausgang abdichtenden Bereiches definiert ist, als $t_{MC}$ bezeichnet ist,

6) eine Dicke des Ringes (2b) am mittleren Durchmesser $D_m$ als $t_{MB}$ bezeichnet ist,

7) eine mittlere Dicke der Deckplatte (2a) außerhalb eines zweiten Kreises, der eine Kreissehne eines Sektors mit einem Zentrumswinkel $\theta_R$ beschreibt, als $t_C$ bezeichnet ist,

8) eine mittlere Dicke des Rings (2b) als $t_B$ bezeichnet ist, und

9) ein Steifigkeitsverhältnis $K_R$ das Verhältnis der Steifigkeit der Deckplatte (2a) und des Ringes (2b) zur Steifigkeit der Läuferschaufeln (2c) ist, indem eine Steifigkeit der Läuferschaufeln (2c) als eine Bezugsgröße genommen wird,

das Steifigkeitsverhältnis $K_R$ so bestimmt ist, daß ein Momentenbeiwert $C_{MO}$, der eine Funktion von cos($\theta_R$n) und des Steifigkeitsverhältnisses $K_R$ ist, geringer als 0.5 gemäß dem Wert der trigonometrischen Funktion cos($\theta_R$n) ist, die sich in Abhängigkeit von der Anzahl von Läuferschaufeln $Z_R$ und der Anzahl von Leitschaufeln $Z_G$ verändert; worin, wenn ein Wert von cos($\theta_R$n) positiv ist, Verhältnisse von $t_C/t_{MC} \geqq 1$ und $t_B/t_{MB} \geqq 1$ erhalten werden und, wenn ein Wert von cos($\theta_R$n) negativ ist, Verhältnisse von $t_C/t_{MC} \leqq 1$ und $t_B/t_{MB} \leqq 1$ erhalten werden.

## Revendications

**1.** Turbine-pompe pour hautes chutes, comportant :
une roue (2) de turbine-pompe plate ayant un diamètre $D_0$ au niveau de sa périphérie la plus extérieure, une partie d'étanchéité de l'orifice de sortie située sur un côté intérieur de la roue (2), une couronne (2a), une bande (2b), plusieurs aubes de roue (2c) formant une cascade d'aubes de roue, les aubes de roue (2c) reliant la couronne à la bande de telle sorte que plusieurs trajets d'écoulement sont formés, chacun desdits trajets d'écoulement étant défini entre la couronne (2a), la bande (2b), et des aubes de roue (2c) adjacentes, et

une cascade d'aubes de guidage comportant plusieurs aubes de guidage (3) fines agencées autour de la roue (2),

dans laquelle la hauteur B des trajets d'écoulement au niveau de la périphérie la plus extérieure de la roue, entre la couronne (2a) et la bande (2b), est plus petite que le diamètre $D_0$,

caractérisée en ce que lorsque

1) un nombre entier minimum est défini comme étant

$$n = |Z_G - mZ_R|$$

où m est une variable positive, $Z_R$ est le nombre d'aubes de roue (2c), et $Z_G$ est le nombre d'aubes de guidage (3),

2) un angle axial défini entre des aubes de roue adjacentes (2c) et un point axial de la roue est indiqué par $\theta_R$,

3) un retard de phase entre les forces hydrauliques d'excitation agissant sur les aubes de roue adjacentes (2c) est défini comme étant $\theta_R n$,

4) une fonction trigonométrique du retard de phase varie en fonction du nombre d'aubes de roue $Z_R$ et du nombre d'aubes de guidage $Z_G$, la fonction trigonométrique étant définie comme étant cos-($\theta_R n$),

5) l'épaisseur moyenne de la couronne (2a) le long d'un premier cercle défini par un diamètre moyen $D_m$ existant au niveau d'un point médian entre le diamètre périphérique le plus extérieur $D_0$ de la roue (2) et un diamètre maximum $D_S$ de la partie d'étanchéité de l'orifice de sortie, est indiquée comme étant $t_{MC}$,

6) l'épaisseur de la bande (2b) au niveau du diamètre moyen $D_m$ est indiquée comme étant $t_{MB}$,

7) l'épaisseur moyenne de la couronne (2a) à l'extérieur d'un second cercle inscrivant une corde d'un secteur ayant l'angle axial $\theta_R$ est indiquée comme étant $t_C$,

8) l'épaisseur moyenne de la bande (2b) est indiquée comme étant $t_B$, et

9) un rapport de rigidité $K_R$ est le rapport de la rigidité de la couronne (2a) et de la bande (2b) sur la rigidité des aubes de roue (2c) en prenant en tant que référence la rigidité des aubes de roue (2c),

le rapport de rigidité $K_R$ est déterminé de sorte qu'un coefficient de moment $C_{MO}$ qui est une fonction de $\cos(\theta_R n)$ et du rapport de rigidité $K_R$ soit plus petit que 0,5 conformément à la valeur de la fonction trigonométrique $\cos(\theta_R n)$ qui varie en fonction du nombre d'aubes de roue $Z_R$ et du nombre d'aubes de guidage $Z_G$,

dans laquelle lorsque la valeur de $\cos(\theta_R n)$ est positive, les relations $t_C/t_{MC} \geqq 1$ et $t_B/t_{MB} \geqq 1$ sont obtenues et lorsque la valeur de $\cos(\theta_R n)$ est négative, les relations $t_C/t_{MC} \leqq 1$ et $t_B/t_{MB} \leqq 1$ sont obtenues.

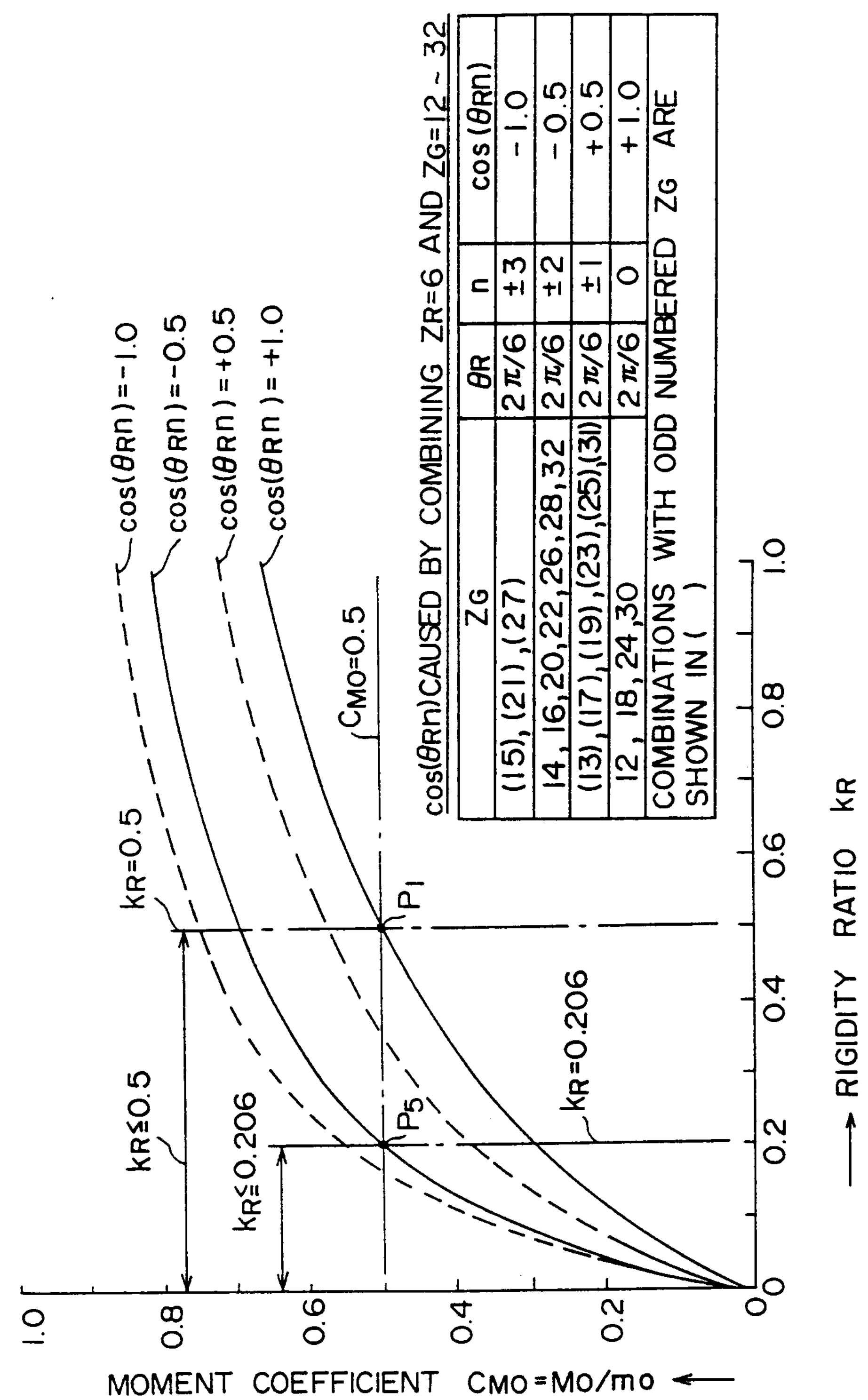
cos(θRn) = -1.0
cos(θRn) = -0.5
cos(θRn) = +0.5
cos(θRn) = +1.0
kR=0.5
kR≦0.5
kR≦0.206
kR=0.206
P1
P5
CMO=0.5
cos(θRn) CAUSED BY COMBINING ZR=6 AND ZG=12 ~ 32
| ZG | θR | n | cos(θRn) |
|---|---|---|---|
| (15), (21), (27) | 2π/6 | ±3 | -1.0 |
| 14, 16, 20, 22, 26, 28, 32 | 2π/6 | ±2 | -0.5 |
| (13), (17), (19), (23), (25), (31) | 2π/6 | ±1 | +0.5 |
| 12, 18, 24, 30 | 2π/6 | 0 | +1.0 |
COMBINATIONS WITH ODD NUMBERED ZG ARE SHOWN IN ( )
0
0.2
0.4
0.6
0.8
1.0
→ RIGIDITY RATIO kR
MOMENT COEFFICIENT CMO=Mo/mo ←

FIG. 1

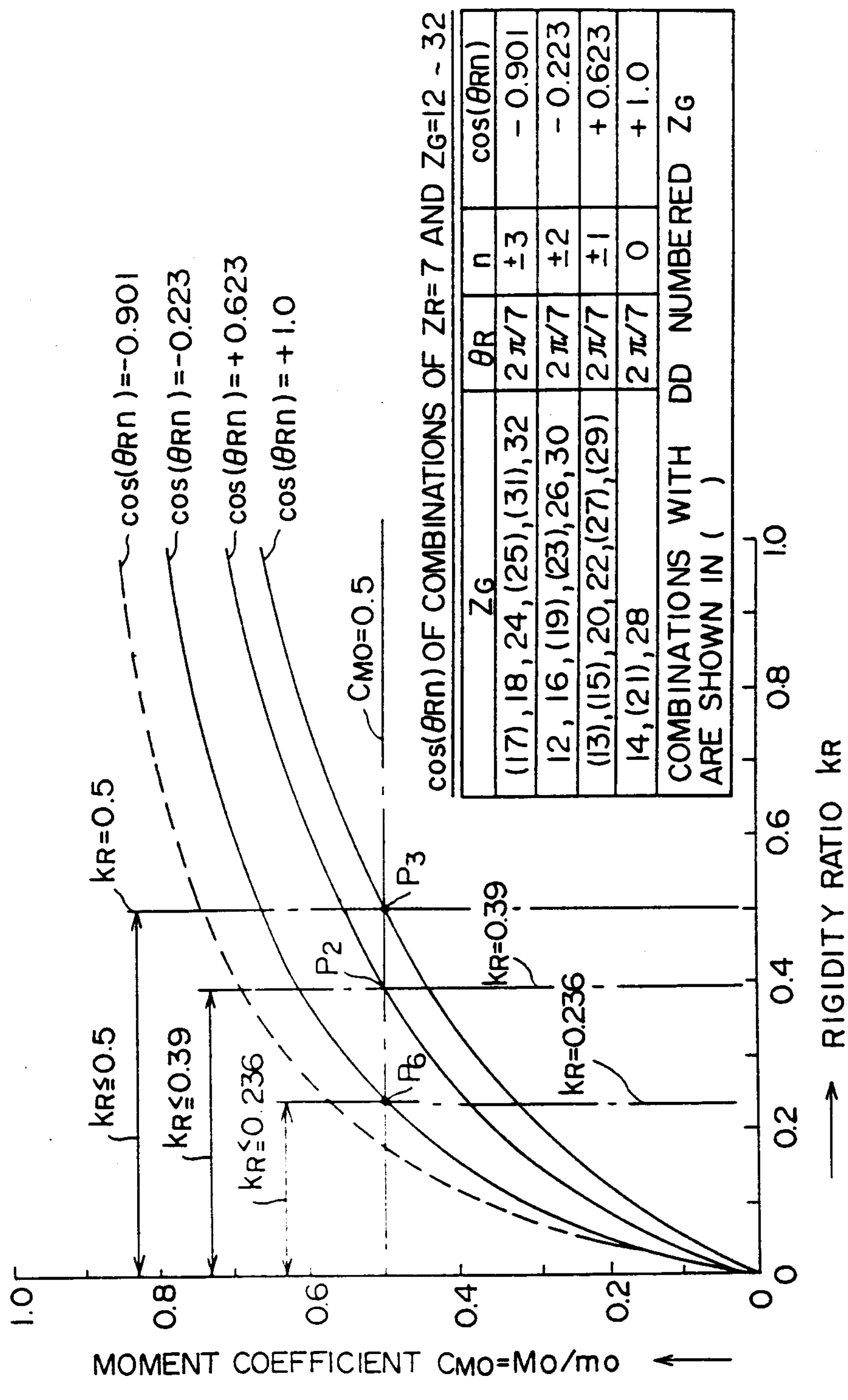
MOMENT COEFFICIENT CMO=Mo/mo
RIGIDITY RATIO kR
0
0.2
0.4
0.6
0.8
1.0
cos(θRn)=-0.901
cos(θRn)=-0.223
cos(θRn)=+0.623
cos(θRn)=+1.0
CMO=0.5
kR=0.5
kR=0.39
kR=0.236
kR≦0.5
kR≦0.39
kR≦0.236
P2
P3
P6
cos(θRn) OF COMBINATIONS OF ZR=7 AND ZG=12 ~ 32
ZG | θR | n | cos(θRn)
(17), 18, 24, (25), (31), 32 | 2π/7 | ±3 | -0.901
12, 16, (19), (23), 26, 30 | 2π/7 | ±2 | -0.223
(13), (15), 20, 22, (27), (29) | 2π/7 | ±1 | +0.623
14, (21), 28 | 2π/7 | 0 | +1.0
COMBINATIONS WITH DD NUMBERED ZG
ARE SHOWN IN ( )

FIG. 2

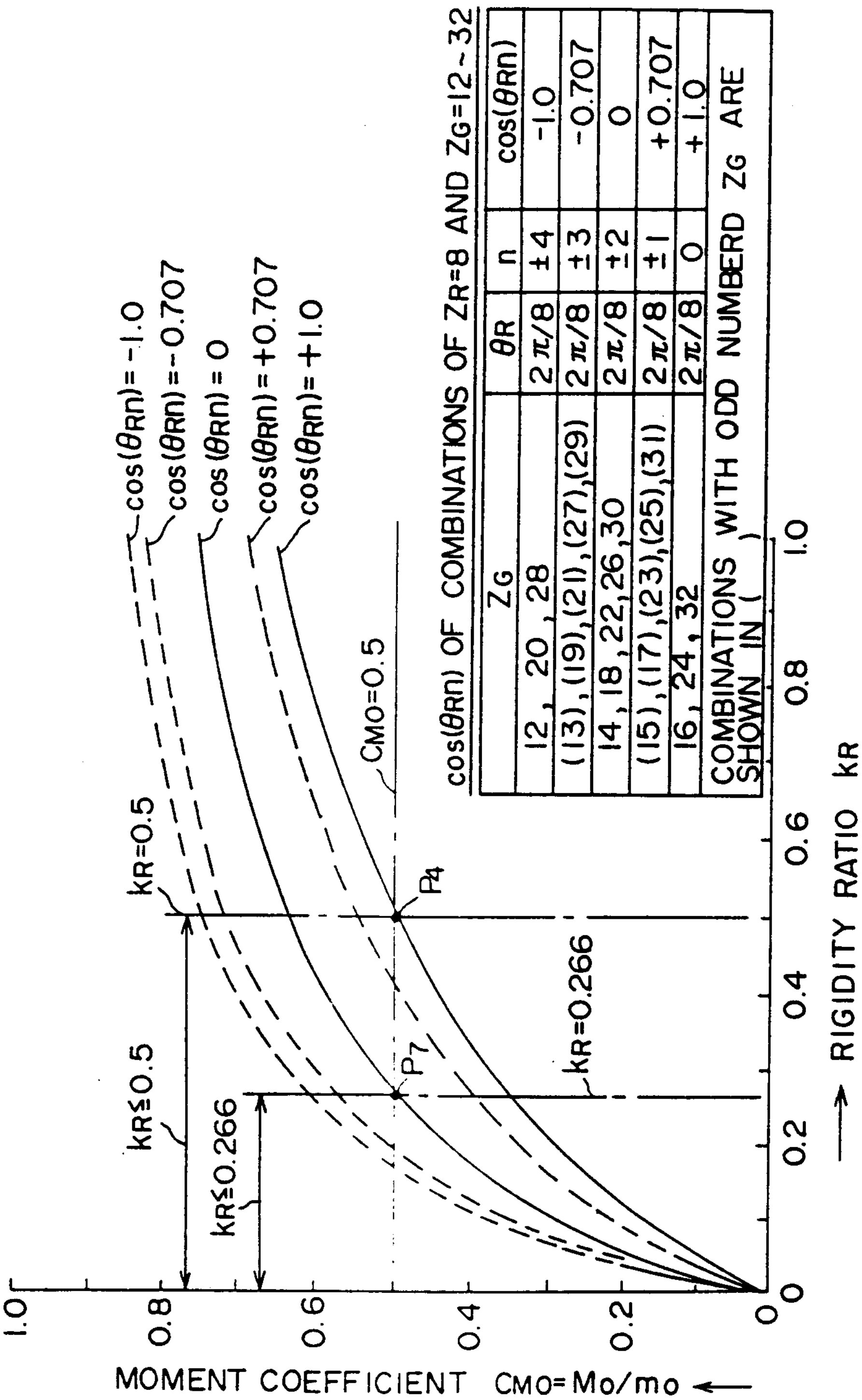
cos(θRn)= -1.0
cos(θRn)= -0.707
cos(θRn)= 0
cos(θRn)= +0.707
cos(θRn)= +1.0
kR=0.5
kR≤0.5
kR≤0.266
kR=0.266
CMO=0.5
P4
P7
MOMENT COEFFICIENT CMO=Mo/mo
RIGIDITY RATIO kR
0
0.2
0.4
0.6
0.8
1.0
cos(θRn) OF COMBINATIONS OF ZR=8 AND ZG=12~32
ZG | θR | n | cos(θRn)
12, 20, 28 | 2π/8 | ±4 | -1.0
(13),(19),(21),(27),(29) | 2π/8 | ±3 | -0.707
14, 18, 22, 26, 30 | 2π/8 | ±2 | 0
(15),(17),(23),(25),(31) | 2π/8 | ±1 | +0.707
16, 24, 32 | 2π/8 | 0 | +1.0
COMBINATIONS WITH ODD NUMBERD ZG ARE SHOWN IN ( )

FIG. 3

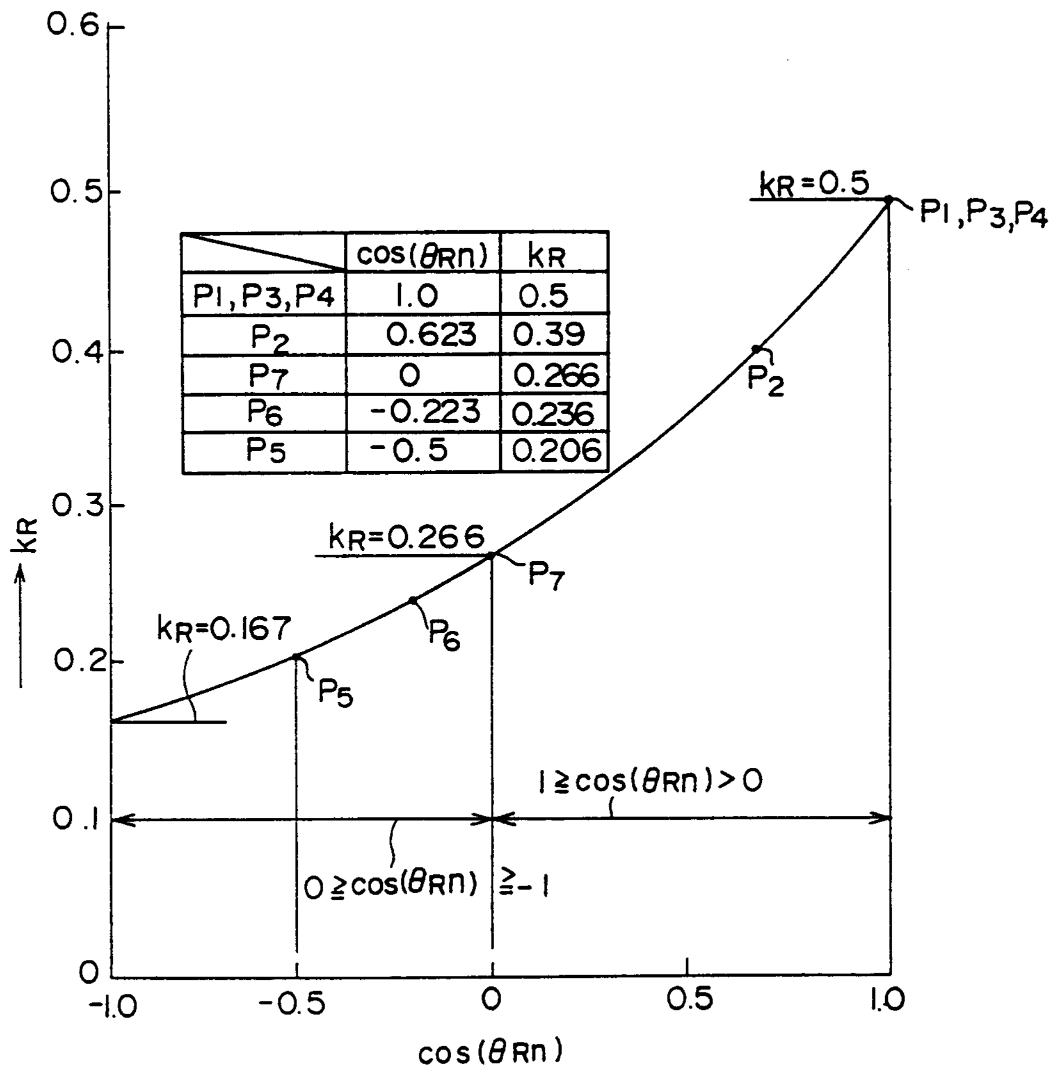


| | cos(θRn) | kR |
|---|---|---|
| P1,P3,P4 | 1.0 | 0.5 |
| P2 | 0.623 | 0.39 |
| P7 | 0 | 0.266 |
| P6 | -0.223 | 0.236 |
| P5 | -0.5 | 0.206 |

FIG.4

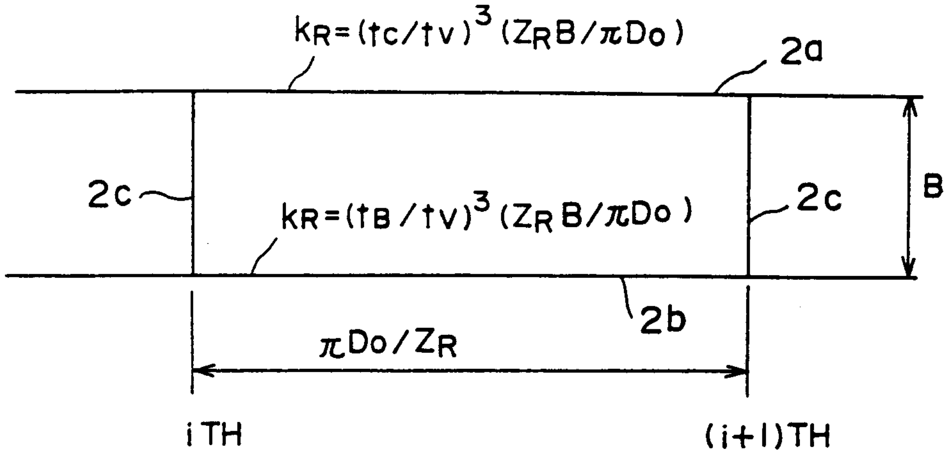
kR=(tc/tv)3 (ZRB/πDo)
2a
2c
kR=(tB/tv)3 (ZR B/πDo)
2c
B
2b
πDo/ZR
iTH
(i+1)TH

FIG. 5

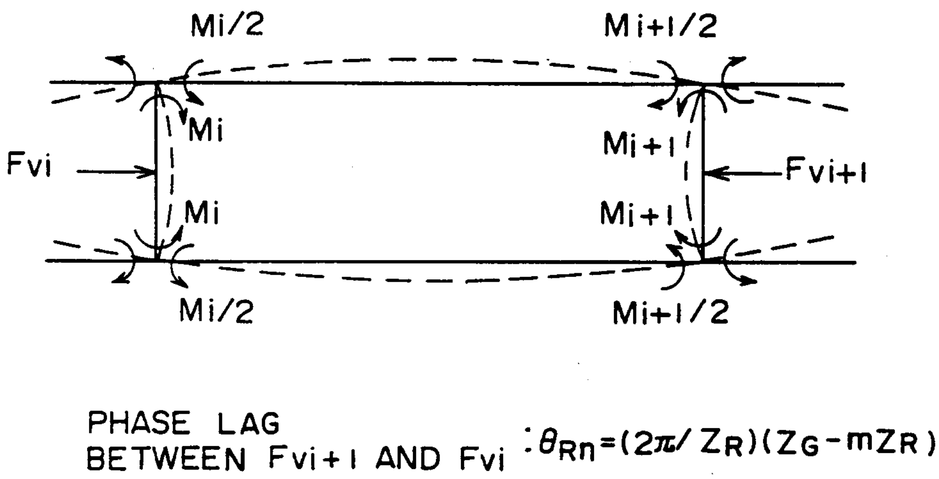
Mi/2
Mi+1/2
Mi
Mi+1
Fvi
Fvi+1
Mi
Mi+1
Mi/2
Mi+1/2
PHASE LAG
BETWEEN Fvi+1 AND Fvi : θRn=(2π/ ZR)(ZG-mZR)

FIG. 6

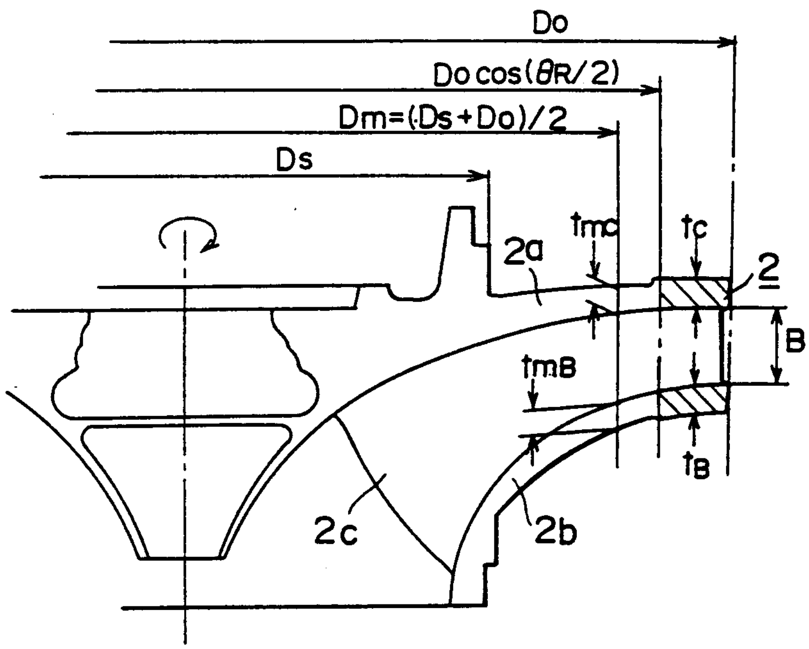
Do
Do cos(θR/2)
Dm=(Ds+Do)/2
Ds
2a
tmc
tc
2
B
tmB
tB
2c
2b

FIG. 7

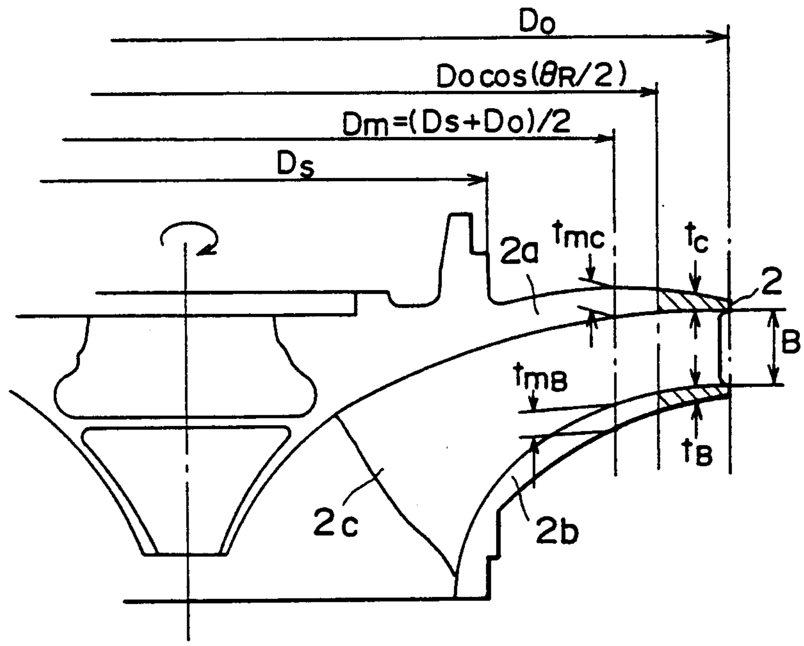
Do
Do cos(θR/2)
Dm=(Ds+Do)/2
Ds
2a
tmc
tc
2
B
tmB
tB
2c
2b

FIG. 8

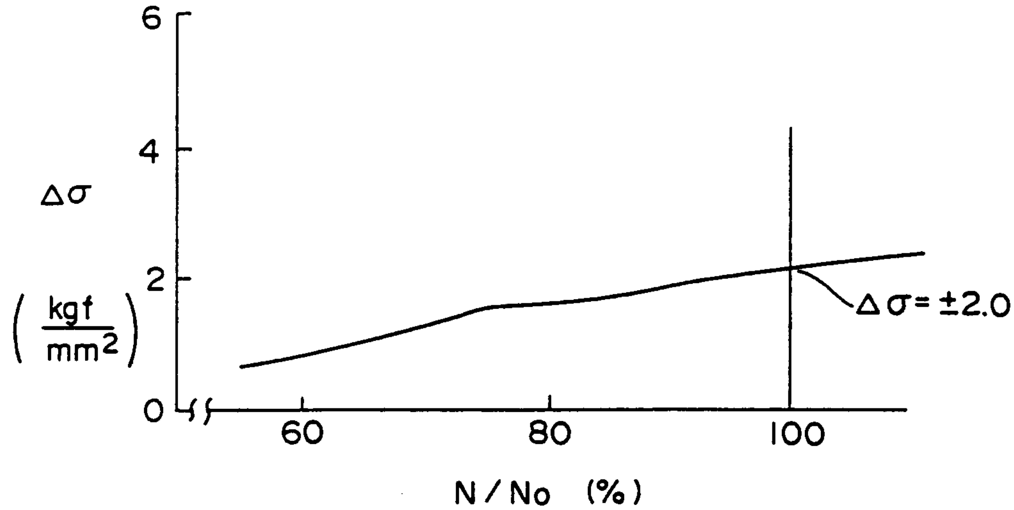
6
4
2
0
Δσ
(kgf/mm2)
60
80
100
N / No (%)
Δσ= ±2.0

FIG. 9

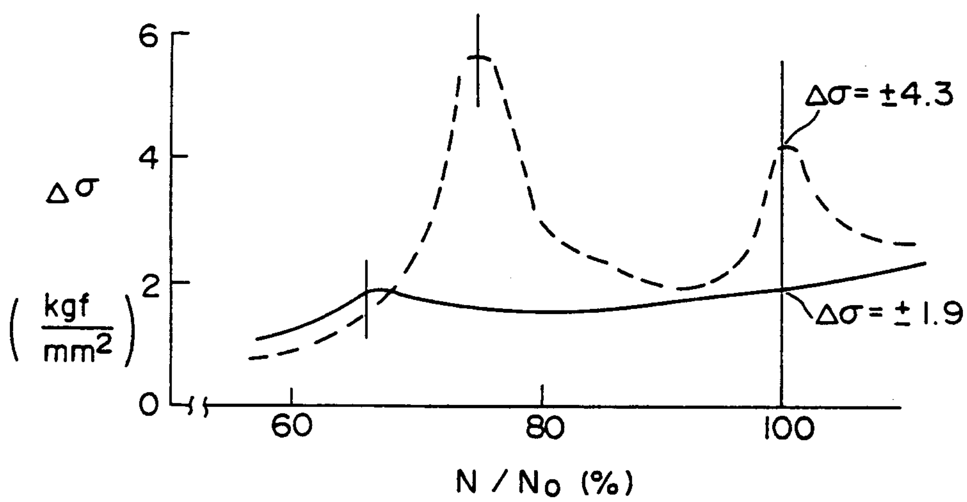
6
4
2
0
Δσ
(kgf/mm2)
60
80
100
N / No (%)
Δσ= ±4.3
Δσ= ±1.9

FIG.10

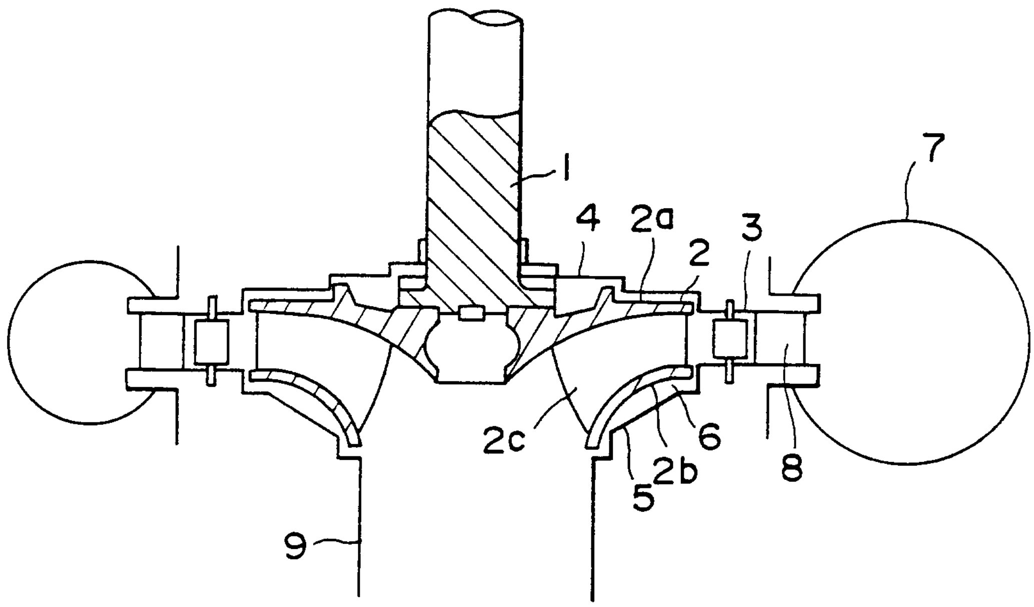


FIG.11 PRIOR ART

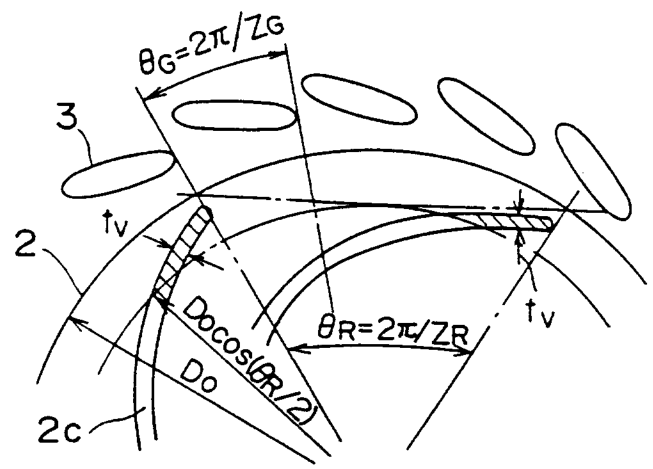


FIG.12 PRIOR ART

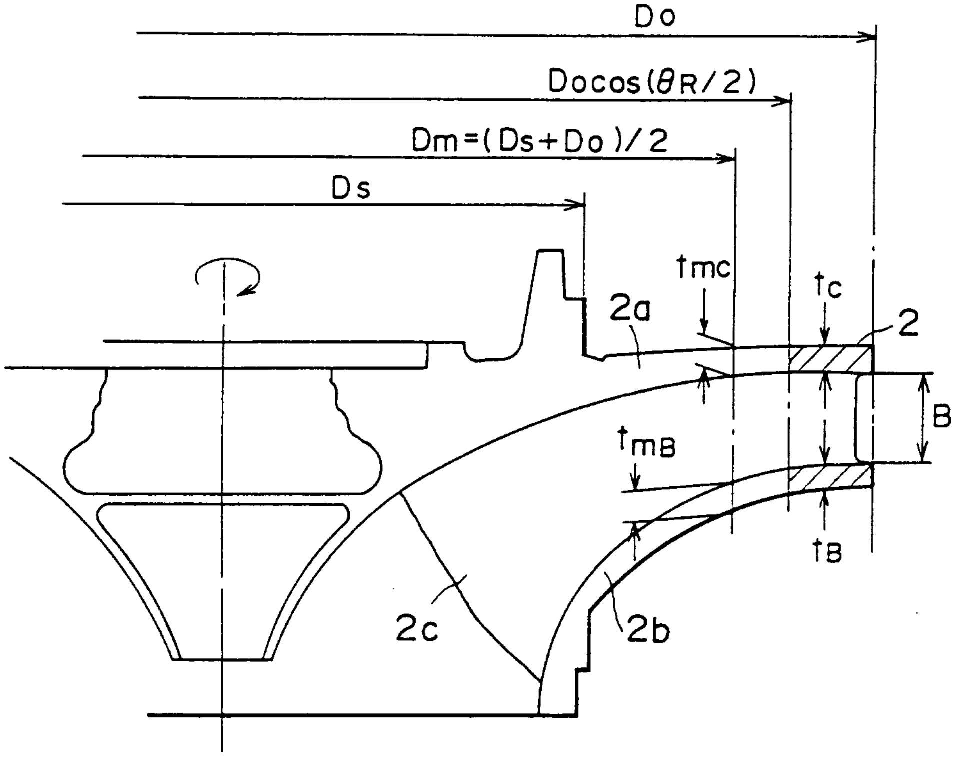
Do
Docos(θR/2)
Dm=(Ds+Do)/2
Ds
tmc
tc
2a
2
B
tmB
tB
2c
2b

FIG. 13

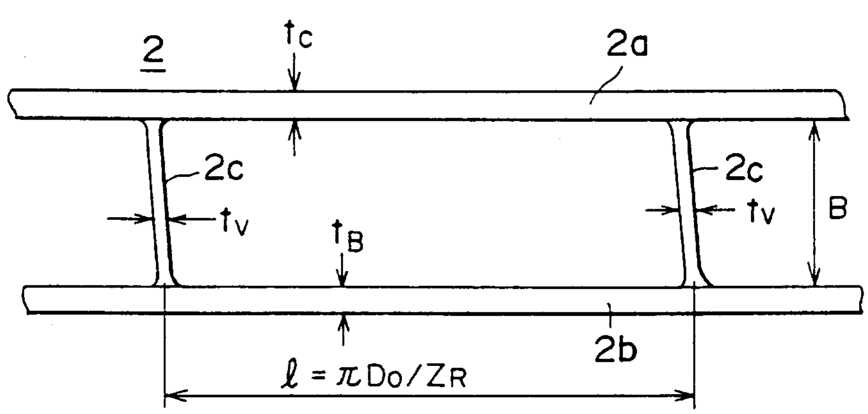
2
tc
2a
2c
2c
tv
tv
tB
B
2b
ℓ = πDo/ZR

FIG. 14

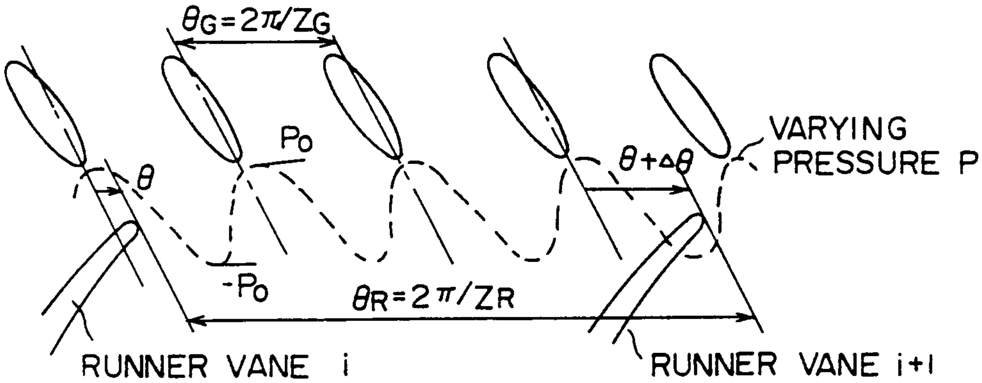
θG=2π/ZG
Po
θ
θ+Δθ
VARYING PRESSURE P
-Po
θR=2π/ZR
RUNNER VANE i
RUNNER VANE i+1

FIG. 15

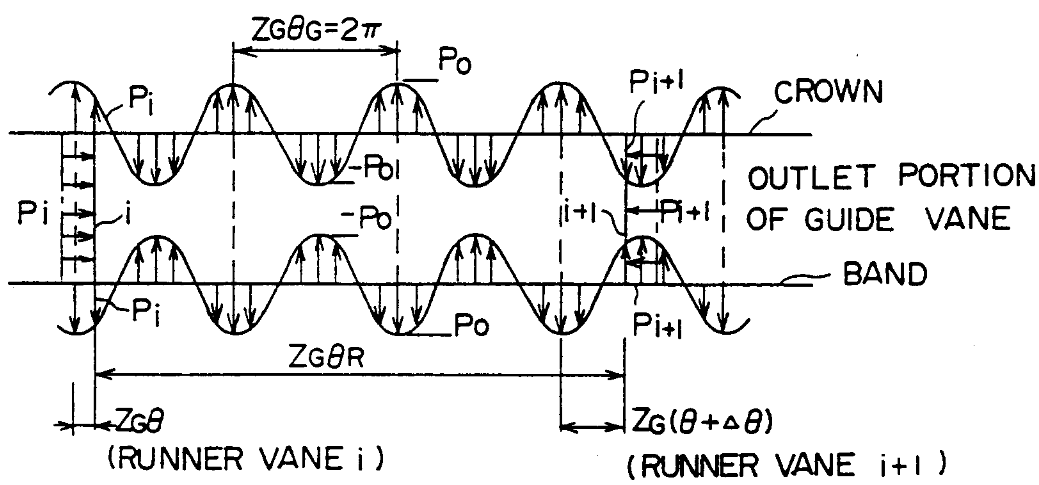
ZGθG=2π
Po
Pi
Pi+1
CROWN
-Po
OUTLET PORTION OF GUIDE VANE
Pi
i
-Po
i+1
Pi+1
BAND
Pi
Po
Pi+1
ZGθR
ZGθ
(RUNNER VANE i)
ZG(θ+Δθ)
(RUNNER VANE i+1)

FIG.16